# EUROPEAN PATENT SPECIFICATION

(11) **EP 2 389 621 B1**
(45) Date of publication and mention of the grant of the patent: **13.11.2013**
(21) Application number: 10706375.2
(22) Date of filing: 22.01.2010
(51) Int. Cl.: G06F 3/033

(54) **CONTROL DEVICE FOR REMOTE CONTROL OF A SYSTEM**
STEUEREINRICHTUNG ZUR FERNSTEUERUNG EINES SYSTEMS
DISPOSITIF DE COMMANDE POUR TÉLÉCOMMANDER UN SYSTÈME

(30) Priority: 23.01.2009 IT MO20090016
(43) Date of publication of application: 30.11.2011
(73) Proprietor: Cefriel - Societa' Consortile A Responsabilita' Limitata, 20133 Milano (MI) (IT); Trabucco, Francesco, 20134 Milano (MI) (IT)
(72) Inventor: TRABUCCO, Francesco, I-20134 Milano (MI) (IT); QUARANTA, Paolo, Cincinnati, Ohio 45236 (US); RIGAMONTI, Matteo, I-20045 Besana Brianza (MI) (IT); RUSSI, Vincenzo, I-20151 Milano (MI) (IT)
(74) Representative: Crugnola, Pietro
(86) International application number: PCT/IB2010/050291
(87) International publication number: WO 2010/084474

(56) References cited:
- WO-A-2006/066409
- WO-A1-2008/002239
- FR-A- 2 901 376
- US-A- 4 787 051
- US-A- 5 940 066
- US-A1- 2001 047 215
- US-A1- 2004 150 632
- US-B1- 6 211 863
- HINCKLEY K ET AL: "THE VIDEOMOUSE: A CAMERA-BASED MULTI-DEGREE-OF-FREEDOM IMPUT DEVICE", UIST. PROCEEDINGS OF THE ANNUAL ACM SYMPOSIUM ON USER INTERFACESOFTWARE AND TECHNOLOGY, XX, XX, vol. 1, no. 1, 1 January 1999 (1999-01-01) , pages 103-112, XP001148435,
- RAVIN BALAKRISHNAN ET AL: "The Rockin' Mouse: Integral 3D Manipulation on a Plane", PROCEEDINGS OF THE SIGCHI CONFERENCE ON HUMAN FACTORS IN COMPUTING SYSTEMS; [CONFERENCE ON HUMAN FACTORS IN COMPUTING SYSTEMS], NEW YORK, NY, USA, 22 March 1997 (1997-03-22), pages 1-12, XP002257214, ISBN: 978-0-89791-802-2

## Description

The invention relates to a control device, in particular a control device for sending data to and receiving data from a system to be remote controlled in order to manage and control the system.

Control devices are known that impart commands to a system generating, by a suitable emitter, electromagnetic signals that can be captured by the system via a suitable receiver. In order to impart the commands to the system, known control devices are provided with different, and often numerous pushbuttons that once they have been pressed, activate the emitter that sends the appropriate electromagnetic signals to the receiver.

In particular, the emitter of the control device, for example an infrared LED, emits the signal that, suitably modulated, transmits information to the receiver. Subsequently, the receiver processes the above information, received by the modulated signal, to transform the information into data that are suitable for activating a plurality of functions in the system.

A drawback of the control devices of known type is that the pushbuttons can be inconvenient to manage for the user. Further, they are often mechanically delicate and thus subject to faults.

Another drawback of the control devices of known type is that the presence of numerous pushbuttons implies control device with unnecessarily great dimensions and thus the control devices are very inconvenient to handle and a user may even need an entire hand to use the control device. Another drawback of control devices of known type is that when using the pushbuttons a user may make different errors because of the relatively small dimensions that such pushbuttons may have.

Still another drawback of control devices of known type is that the pushbuttons are not immediately readable because of the number of pushbuttons and because of the fact that with each pushbutton a different function is associated that is not identifiable by merely observing the control device.

A further drawback of the control devices of known type is that the pushbuttons are not very visible in poor lighting conditions.

French patent application FR 2 901 376 A1 discloses a mouse for a computer, comprising a housing and accelerometers for detecting a motion of the housing. The housing can be pen-shaped.

One object of the invention is to overcome the drawbacks of control devices of known type.

According to the invention a control device is provided as defined in claim 1.

Owing to the invention, it is possible to obtain a control device that is extremely manoeuvrable, simple and compact. The invention can be better understood and implemented with reference to the attached drawings that show embodiments thereof by way of non-limiting example, in which:
Figure 1 is a diagram of a remote control device according to the invention and of a system controlled by the control device;
Figure 2 is a block diagram of the control device according to the invention;
Figure 3 is a schematic perspective view of a first embodiment of the control device according to the invention;
Figure 4 is a side view of the control device in Figure 3;
Figure 5 is a schematic perspective view of the control device in Figure 3 in a use mode;
Figure 6 is a schematic perspective view of the control device in Figure 3 in another use mode;
Figure 7 is a schematic perspective view of the control device in Figure 3 in a further use mode;
Figure 8 is a schematic perspective view of the control device in Figure 3 in still another use mode;
Figure 9 is a Schematic perspective view of the control device in Figure 3 in a still further use mode;
Figure 10 is a schematic perspective view of the control device in Figure 3 in another use mode;
Figure 11 is a schematic perspective view of the control device in Figure 3 in a further use mode;
Figure 12 is a schematic perspective view of the control device in Figure 3 in a still further use mode;
Figure 13 is a schematic perspective view of a second embodiment of the control device according to the invention;
Figure 14 is a side view of the control device in Figure 13;
Figure 15 is a schematic perspective view of a third embodiment of the control device according to the invention;
Figure 16 is a side view of the control device in Figure 15;
Figure 17 is a schematic perspective view of a fourth embodiment of the control device according to the invention;
Figure 18 is a side view of the control device in Figure 17;
Figure 19 is a schematic perspective view of a fifth embodiment of the control device according to the invention;
Figure 20 is a side view of the control device in Figure 19.

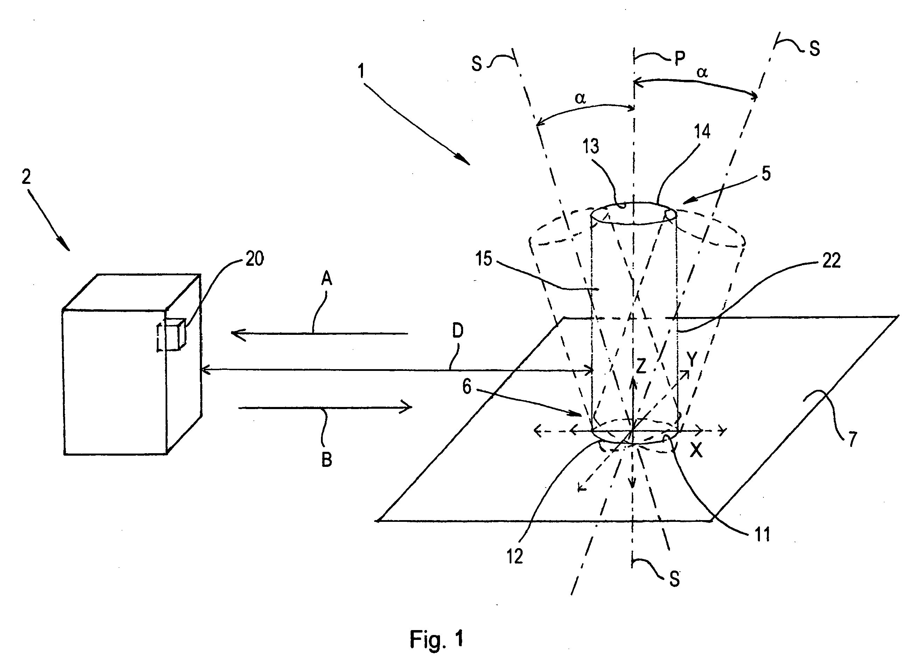

With reference to Figure 1, there is illustrated a control device 1 that is suitable for remote control of a system 2, placed at a distance D from the control device 1.

As will be seen below in detail, the control device 1 comprises position sensor means that enables the position of the control device 1 to be obtained in space, such that, for example, it can be displayed on a video interface.

The control device 1 comprises a casing 15 made of a suitable material, for example plastics, that is suitable for housing a plurality of components of the control device 1.

The casing 15 comprises a central portion 22 that is suitable for being gripped by a user at the moment of use of the control device 1.

The casing 15 further comprises a first end 5 and a second end 6. In use, one of the two ends, for example the first end 5, is free to move with respect to a tern of reference axes comprising a first reference axis X, a second reference axis Y and a third reference axis Z, whereas the other end, for example the second end 6, is pivotable on a resting surface 7, such as a resting plane, the palm of a hand of the user, or any other surface on which the control device 1 can be pivoted.

The resting surface 7 can be horizontal, i.e. parallel to planes defined by a pair of axes of the tern of reference axes X, Y and Z, or tilted with respect to the tern of reference axes.

The casing 15 can be cylindrical or substantially cylindrical shaped. For example, it can be shaped as a wand or pen, i.e. having an almost circular cross section and of reduced dimensions and extending further along a longitudinal direction.

If the casing 15 is cylindrical shaped, the second end 6 may comprise a lower surface 11 that is flat and bounded by a lower edge 12 that is curved. Also the first end 5 may comprise an upper surface 13 that is flat and bounded by an upper edge 14 that is curved and of a similar shape to the lower surface 11.

In use, the lower surface 11 can, for example, be brought into contact with the resting surface 7 for the entire extent thereof or can be brought into contact with the resting surface 7 only for a portion of the lower edge 12. This is made possible by tilting the control device 1 by an angle α with respect to an axis P that is perpendicular to the resting surface 7.

If the casing 15 is substantially cylindrical shaped, at least the lower surface 11 of the lower end 6 may not necessarily be flat, but have the shape of a cupola with a circular or polygonal base.

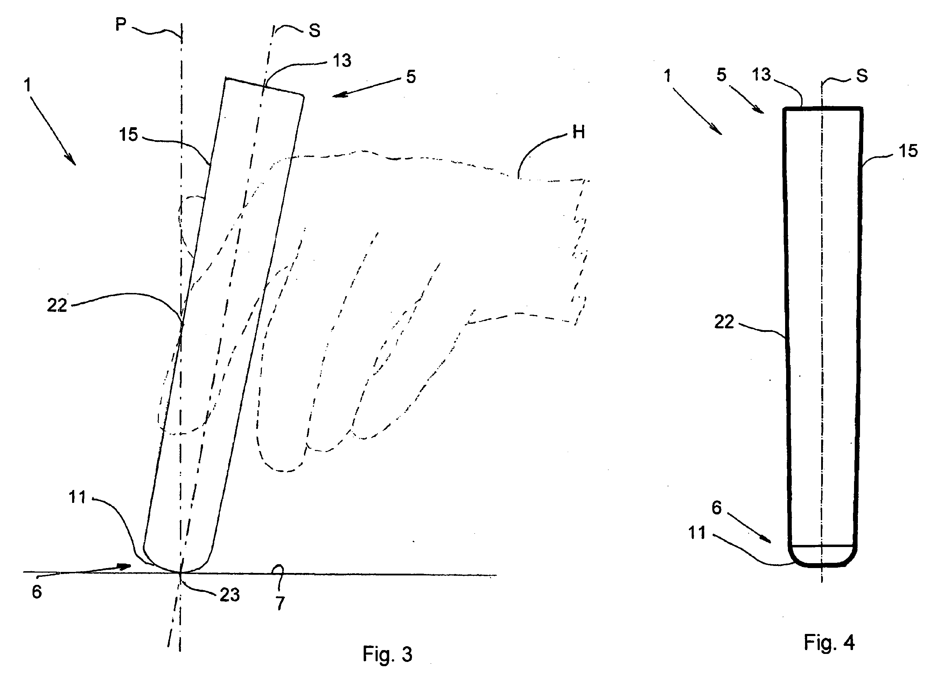

Examples of implementation of control devices 1 having an end, for example the lower end 6, shaped as a cupola are shown in Figures 3 to 20.

The lower surface 11 may have the shape of a more or less squashed and more or less tapered cupola, i.e. it may have a wider or narrower base and may extend more or less in height according to the uses and needs of the user.

The cupola shape of the lower surface 11 makes that a zone 23 of the lower end 6, in particular obtained in the lower surface 11, in contact with the resting surface 7 is the minimum possible. Further, the cupola shape of the lower surface 11 does not require the control device 1 to follow an edge, such as, for example, the lower edge 12, in the rotary, oscillating or translating movements, as occurs if the lower surface 11 is flat and defined by the lower edge 12.

This makes the control device 1 even more easily manoeuvrable.

Both if the casing 15 is cylindrical shaped and if the casing 15 is substantially cylindrical shaped it is possible to define a, preferably barycentric, symmetry axis S of the control device 1.

The symmetry axis S may coincide with the axis P when the control device 1 is in a vertical position, shown in Figure 1 by a continuous line, or deviates therefrom by the angle α when the control device 1 is moved by the user, assuming, for example, the positions shown as a broken line in Figure 1.

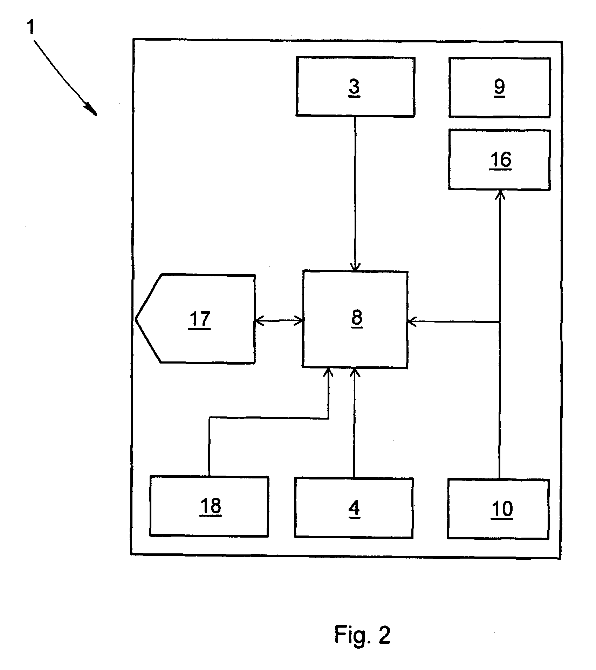

The control device 1 comprises activating means 18, shown schematically in the block diagram of Figure 2, that enables the control device 1 to be switched on and enables the components thereof.

The activating means 18 can be provided at the zone 23.

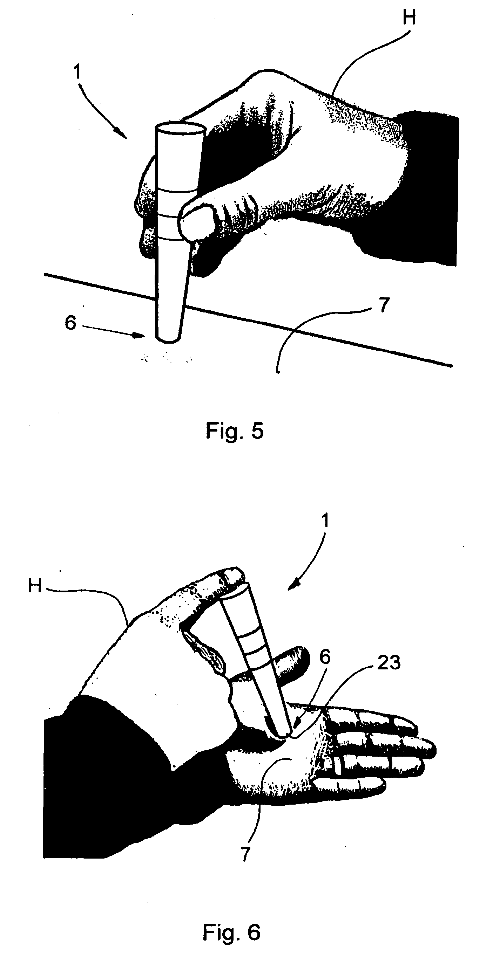

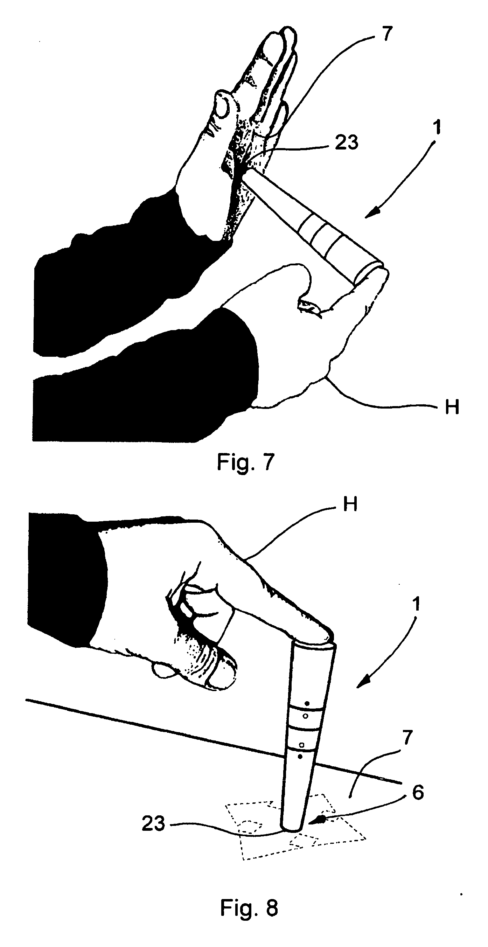

With reference to Figure 5, the activating means 18 in fact detects a contact between the zone 23 and the resting surface 7, for example at the moment in which a user, after grasping the control device 1, exerts appropriate pressure between the zone 23 and the resting surface 7. Only when the activating means 18 detects this contact then the control device 1 is activated and is suitable for being able to operate. Otherwise, the control device 1 is not operative. Activating the control device 1 is independent of the tilt thereof, as shown in Figures 6 and 7.

The activating means 18 can comprise sensors, for example a sensor of piezoelectric type (pressure sensor), or of optical type (proximity sensor) or, lastly, of electromechanical type (microswitch).

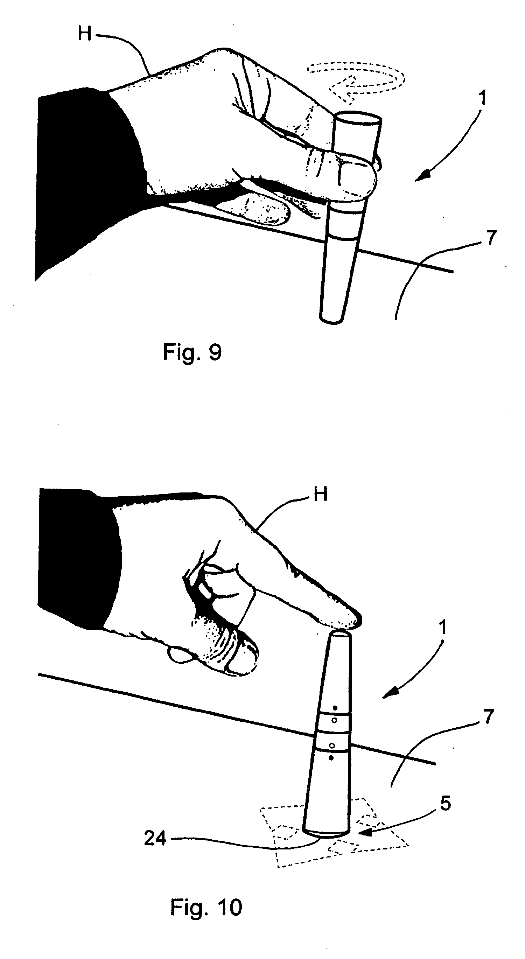

With reference to Figures 8 and 9, the zone 23 of the lower surface 11 can act as a sort of fulcrum that constitutes the centre of the tern of reference axes on which to pivot the control device 1 to be able to move the control device 1 as a control lever (joystick). In particular, in fact, it is able to rotate and/or oscillate the control device 1 by using as a fulcrum the zone 23 of the lower surface 11 such that the symmetry axis S of the control device 1 is tilted by an angle α with respect to the axis P that is perpendicular to the resting surface 7 and is rotated or oscillated around the latter. In this manner, the control device 1 can assume, for example, the positions shown in a broken line in Figure 1. The angle α of tilt of the control device 1 with respect to the axis P can vary during a rotation or during an oscillation of the control device 1. Each rotational, oscillatory and/or translational movement or combination of movements of the control device 1 can be converted into an input command to the system 2 to be controlled and a specific function can be assigned to each movement or combination of movements.

The lower surface 6 is made of a suitable material that puts into relief the zone 23 that contacts the resting surface 7 and facilitates the rotational, oscillatory and/or translational movements thereof that the control device 1 performs on the resting surface 7.

The cylindrical or substantially cylindrical shape makes the control device 1 easily graspable and handlable by the user. The cupola shape of the lower surface 11 enables the use of the control device 1 as a control lever to be facilitated, making the control device 1 extremely manoeuvrable. Alternatively the control device 1 may have the shape of a parallelepipedon or of other three-dimensional solids and, in general, various shapes and dimensions, provided that they are sufficient to enable rotational, oscillatory, and/or translational movements of the control device 1. In this case the lower edge 12 and/or the upper edge 14 may be substantially polygonal.

It is possible to provide additionally, or alternatively to the activating means 18, further activating means that is completely similar in structure and operation to the activating means 18, suitable for detecting a contact between a further zone 24, obtained on the upper surface 13, and the resting surface 7.

The further activating means can be placed at the further zone 24.

Owing to the further activating sensor means, it is also possible to pivot the first end 5 of the control device 1 on the resting surface 7, thus activating the control device 1, just as illustrated in Figure 8. The control device 1 can thus be used on both sides and it is possible to assign different functions to the contact of the zone 23 or of the further zone 24 with the resting surface 7.

The position sensor means is suitable for detecting rotational, oscillatory and/or translational movements of the control device 1 with respect to axes parallel to the first reference axis X, to the second reference axis Y or to the third reference axis Z, in order to identify the position thereof in space, and thus the movements that have occurred.

By way of example in Figures 8 and 10 the translating movements of the control device 1 on the resting surface 7 are shown with four arrows, whilst in Figure 9 a possible rotational movement of the control device 1 on the resting surface 7 is shown with an arrow.

In order to define the aforesaid rotational, oscillatory and/or translating movements, the position sensor means comprises tilt sensor means 3 and translation sensor means 4, shown schematically in the block diagram of Figure 2.

The tilt sensor means 3, such as, for example, gyroscopes and inclinometers, are able to detect angular deviations of the control device 1 with respect to the tern of reference axes X, Y and Z. In particular, the tilt sensor means 3 is able to measure the angle α of tilt of the control device 1 with respect to the axis P perpendicular to the resting surface 7 or perpendicular to a plane XY defined by the first reference axis X and by the second reference axis Y. The translation sensor means 4, such as, for example, triaxial accelerometers or combinations of optical and mechanical sensors, are able to detect translation movements of the control device 1 on the resting surface 7, or on a surface parallel to a plane XY defined by the first reference axis X and by the second reference axis Y.

The translation sensor means 4 is also able to detect defined deviations with respect to the third reference axis Z on a plane perpendicular to the plane XY, thus or on a plane XZ, defined by the first reference axis X and by the third reference axis Z, or on a plane YZ, defined by the second reference axis Y and by the third reference axis Z. A particular type of movement on a plane XZ or on a plane YZ is vibration or rapid oscillation that the control device 1 can have in set use configurations.

The position sensor means generates suitable electric signals that are proportional to the translation, rotation and/or oscillation movements detected.

The control device 1 further comprises a processing unit 8, shown schematically in the block diagram of Figure 2, suitable for collecting and processing the electric signals coming from the sensor means. Owing to the electric signals, the processing unit 8 obtains above all the information relating to the status of the control device 1, i.e. whether it is activated or deactivated. Subsequently, the processing unit 8 obtains the information relating to the rotation, oscillation or translation deviations that are necessary for defining the position in space of the control device 1 and for controlling the system 2. The processing unit 8 comprises electronic devices of known type, such as a microprocessor (8, 16 or 32 bits), memories (of volatile or non-volatile type) and other electronic components or circuitry components that are indispensable to the operation of the processing unit 8, such as, for example, oscillators or real time clocks or analogue/digital converters or the like that are not illustrated. The microprocessor may be of the low power type, i.e. be suitable for a portable operating mode of the control device 1.

The processing unit 8 is connected to and communicates with first transceiver means 17 of the control device 1, shown schematically in the block diagram of Figure 2, that manages and controls the remote communication between the control device 1 and the system 2. The first transceiver means 17 can be of wireless type. In this case, the bidirectional communication channel can be implemented in a UHF band (433/868 MHz), in an ISM band (2.4 GHz), in an LF or HF band (125kHz and 13.56MHz) or can be implemented by means of infrared technology by using proprietary protocols or standard protocols or in general by means of any short-wave radio communication protocol.

The first transceiver means 17 may comprise peripheral means, which is not shown, that enables communication with the system 2 to be managed in an alternative manner to wireless transmission.

The peripheral means may comprise a cabled communication port, such as, for example, a USB port or other peripheral means of known type.

The peripheral means may comprise a cable that connects the control device 1 to the system 2.

The system 2 further comprises second transceiver means 20, shown in Figure 1, that receives control signals A coming from the first transceiver 17 of the control device 1 and can send return signals B to the first transceiver means 17. Alternatively or in addition, further second transceiver means that is not shown can be provided that is connectable to the system 2. The further second transceiver means can be of wireless type and can be able to communicate with the control device 1 by using the same wireless communication channel and the same protocol.

The communication channel can also be a physical channel, for example via the peripheral means with which the control device 1 can be provided.

The control device 1 further comprises a supply system 9, shown schematically in the block diagram of Figure 2. The supply system 9 may comprise rechargeable or non-rechargeable batteries and devices for converting and storing energy that are suitable for converting mechanical or thermal energy into electric energy and are suitable for storing such electric energy. These energy collecting devices can be used for recharging the batteries or for operating the control device 1 autonomously. The supply of the supply system 9 can thus be freed from the electric grid owing to the batteries or to the energy-collecting devices. The control device 1 may comprise a minimum number of pushbutton means 10, shown schematically in the block diagram of Figure 2, possibly just one, of mechanical or of touch type, based, for example, on capacitive or piezoelectric solutions.

The pushbutton means 10, once it has been activated, commands the transmission of the preset control signals A to the system 2.

The pushbutton means 10 is positioned on the casing 15 of the control device 1 in positions that are easily reachable by the fingers of a hand H of the user when the latter grasps the control device 1 to use the control device 1.

The hand H is indicated in Figures 5-12 by a continuous line, whilst in Figures 3, 13, 15, 17 and 19 it is indicated by a broken line to highlight the conformation of the control device 1.

The pushbutton means 10 can be positioned on the central portion 22 of the control device 1 and/or on the lower surface 11 and/or on the upper surface 13.

The pushbutton means 10 may be of reduced dimensions or at least one pushbutton means can be provided that extends longitudinally or transversely on the outer surface of the casing 15 and having a semi-strip or any other suitable shape.

By means of the pressure of the user on suitable zones of the control device 1, such as the pushbutton means 10, the user can confirm and send to the system 2 to be controlled the command obtained by spatial movements.

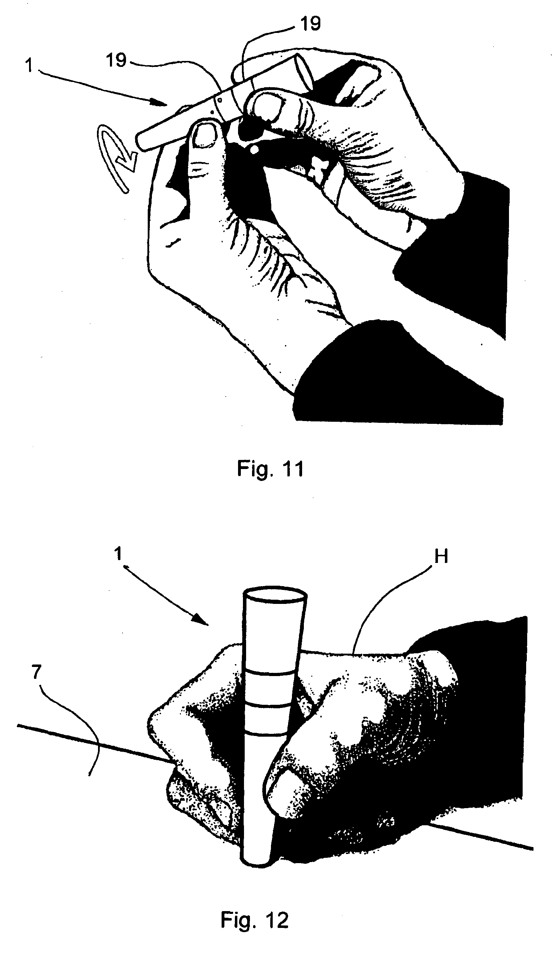

The control device 1 can be divided along the central portion 22 of the casing 15 into one or more sectors 19, in particular into two, as shown in Figure 11, that are mutually rotatable with respect to the casing 15, for sending further control signals to the system 2.

One of the sectors 19 can be rotated clockwise and the other anticlockwise or vice versa. By means of software a specific function can be assigned to each mutual rotation, for example that of lowering or raising the volume of an audio system.

The functions connected to the aforesaid mutual rotations of the sectors 19 of the device can be active even when the zone 23 or the further zone 24 is not in contact with the resting surface 7.

The control device 1 may further comprise interface means 16, shown schematically in the block diagram of Figure 2, that enables information to be transmitted from the control device 1 to the user.

The interface means 16 may comprise visual interface means, such as luminous indicators (LEDs or mini-displays), acoustic interface means, such as sound indicators (buzzers), or mechanical interface means, such as vibration generators (vibramotors) or other interface means 16 that are of known type and are not illustrated here in detail. The control device 1 is connectable to a housing device, which is not illustrated, that can act as a support for the control device 1 when the latter is not used. The housing device may comprise a system for recharging the batteries of the supply system 9 via electric contacts or without connections, for example by exploiting magnetic induction. The batteries can also be recharged through peripheral means if there is one in the control device 1.

The processing unit 8 processes the signals coming from the activating means 18, from the tilt sensor means 3, from the translation sensor means 4, from the pushbutton means 10 and from the interface means 16, that communicate with the processing unit 8 via suitable circuitry and transmit the signals to the second transceiver means 20.

The system 2 can comprise display means that is not illustrated, that is suitable for displaying the effects that the control signals A produce on the system 2.

The operation of the control device 1 will be disclosed below.

When a user wishes or has to intervene on the system 2, he grasps the control device 1 with at least one hand H.

The control device 1 is then placed on the resting surface 7, so that the zone 23 of the lower surface 11 or the further zone 24 of the upper surface 12 contacts the resting surface 7. This enables the control device 1 to move from a deactivated status to an activated status because the activating means 18 detects the aforesaid contact and enables the control device 1.

The tilt sensor means 3 and the translation sensor means 4 detect the information relating to the position of the control device 1. In particular the tilt sensor means 3 detects the angle α of tilt of the control device 1 with respect to the axis P that is perpendicular to the resting surface 7, i.e. measures the tilt of the control device 1. The translation sensor means 4 detects the shifts along the axis X and along the axis Y (i.e. on the plane XY) that the user performs on the control device 1. The aforesaid information is converted into suitable electric signals sent to the processing unit 8, which processes the signals and sends the signals to the first transceiver means 17. The suitably reprocessed electromagnetic signals become the control signals A that the first transceiver means 17 transmits, then, to the second transceiver means 20 of the system 2, by the wireless bidirectional communication channel located between the first transceiver means 17 and the second transceiver means 20.

The information relating to the position of the control device 1 enables the system 2 to be commanded and controlled.

The position sensor means is further able to calculate the distance D between the control device 1 and the system 2, in order to perform certain functions. For example, it is possible to disable the control device 1 when the distance D exceeds a preset value. This enables considerable energy savings to be obtained.

The system 2 can send to the control device 1 the return signals B through the same communication channel that is used by the control device 1 to control the system 2.

The return signals B or other service information can be transferred from the control device 1 to the user. The control device 1 in fact interacts with the user through the interface means 16, conveying to the user information, for example on the status of the system 2 and/or on the control device 1.

The control device 1 can be used to navigate menus that are displayable on the display means connected to or integrated into the system 2. In this case the position of the control device 1 enables determined zones of the menu to be identified that are associated with a plurality of functions according to the type of menu. The pushbutton means 10, once it has been activated, enables the user to access the various options of the navigation menu.

The position sensor means is also able to detect rotation, oscillation and/or translation movements of minor entity and at any speed. This enables the control device 1 to be able to give the control signals A to the system 2 with great precision. It further enables word processing operations to be conducted through the recognition of particular symbols plotted by moving the control device 1.

The control device 1 can, in fact, be used as a pen, in which the movements on the resting surface 7 of the control device 1 describing alphanumeric characters, a straight line or a curved line, the latter shown for example in Figure 12, are recognised by the control device 1 and are translated into electric signals that, once they are stored and reprocessed by the second transceiver means 20 are stored in the system 2 and possibly displayed as a video message on the appropriate display means connected to or integrated into the system 2.

The system 2 can be a mechanical arm or another automatic device of similar use that is movable via the control signals A received by the control device 1. The control device 1, can in fact control the system 2 so that the latter performs the same movements that the user impresses on the control device 1.

This is also exploitable in game-type applications of the control device 1.

The dimensions, shape and weight of the control device 1 are such that the user can apply the rotational, oscillatory and/or translating movements to the control device 1 without the need to use further tools.

Further, the dimensions, shape and weight of the control device 1 are such that the user can manoeuvre the control device 1 with extreme facility even with the only hand H, in particular even with a single finger of the hand H, as shown for example in Figure 8.

In Figure 3 there is shown a first embodiment of the control device 1 that is manoeuvrable by using two fingers of the hand H of the user. In this embodiment the central portion 22 is quite extended in length and the lower surface 11 is cupola shaped with a base that is not particularly extended. In this embodiment the control device 1 has a section taken along a plane that is perpendicular to the symmetry axis S, which is substantially circular.

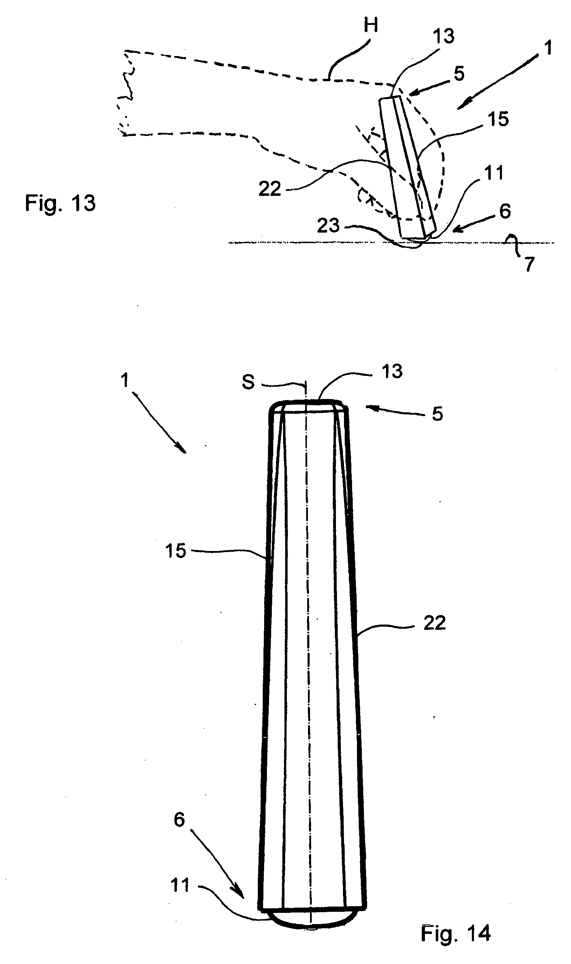

In Figures 13 and 14 there is shown a second embodiment of the control device 1. In this embodiment the central portion 22 has a section taken along a plane that is perpendicular to the symmetry axis S, which is substantially polygonal.

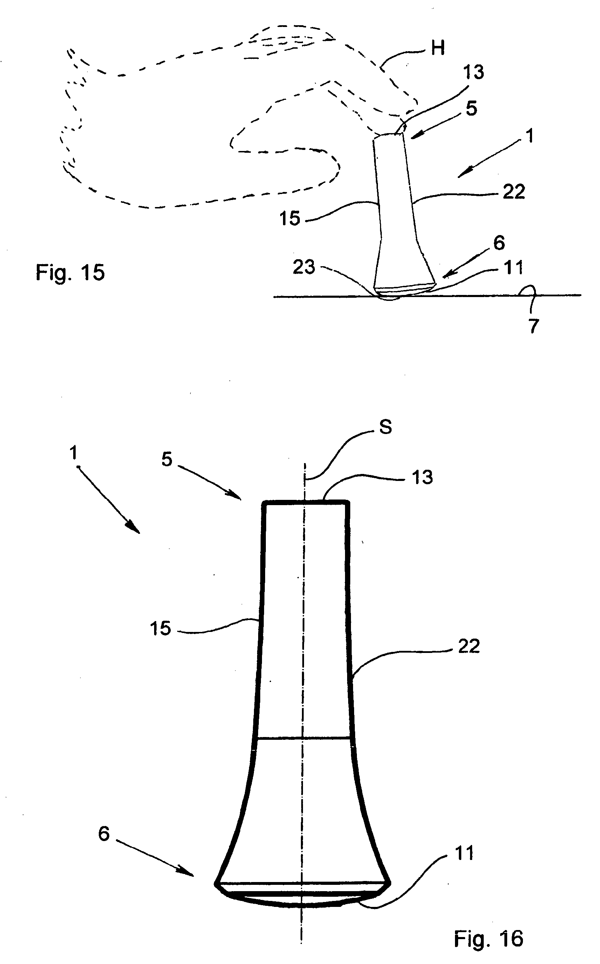

In Figures 15 and 16 a third embodiment of the control device 1 is shown that is manoeuvrable by using only one finger of the hand H, as shown in Figure 15.

As visible in Figures 15 and 16, in fact, the control device 1 has a central portion 22 of reduced dimensions and a lower surface 11 with rather a squashed cupola shape and with quite an extended base. This enables quite a stable equilibrium of the control device 1 to be maintained even when it is manoeuvred with only one finger of the hand H of the user.

Also in this embodiment the control device 1 has a section taken along a plane that is perpendicular to the symmetry axis S, which is substantially circular.

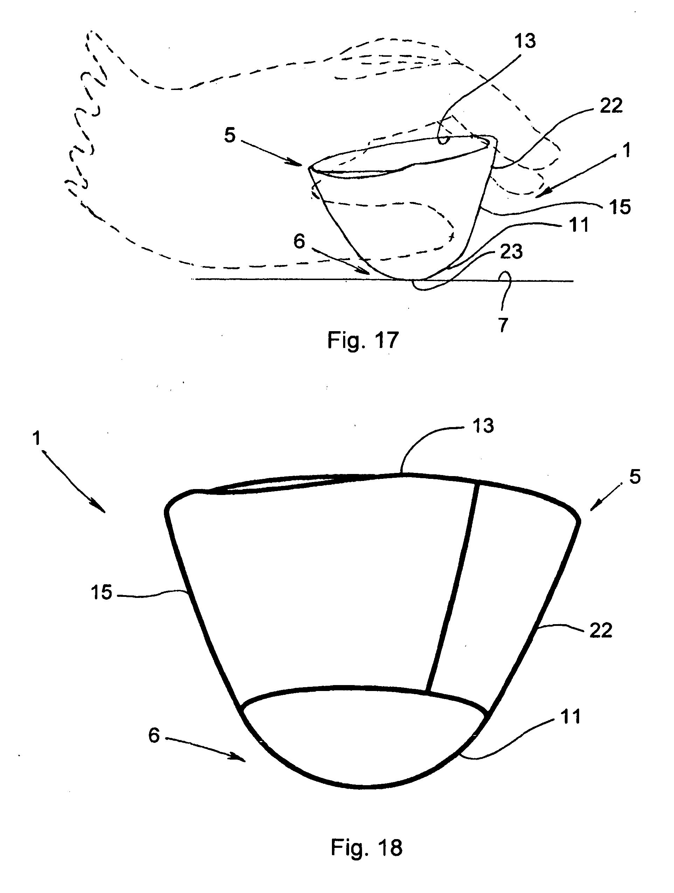

In Figures 17 and 18 there is shown a fourth embodiment of the control device 1, in which the extent of the central portion 22 is reduced to a minimum whereas the lower end 6 is cupola shaped with a base that is particularly extended in width and length. In this case, the use can grasp the control device 1 at the first end 5 and can move the control device 1 via movements impressed by the palm of the hand H that grasps the first end 5.

Also in this embodiment the control device 1 has a section taken along a plane that is perpendicular to the symmetry axis S, which is substantially circular.

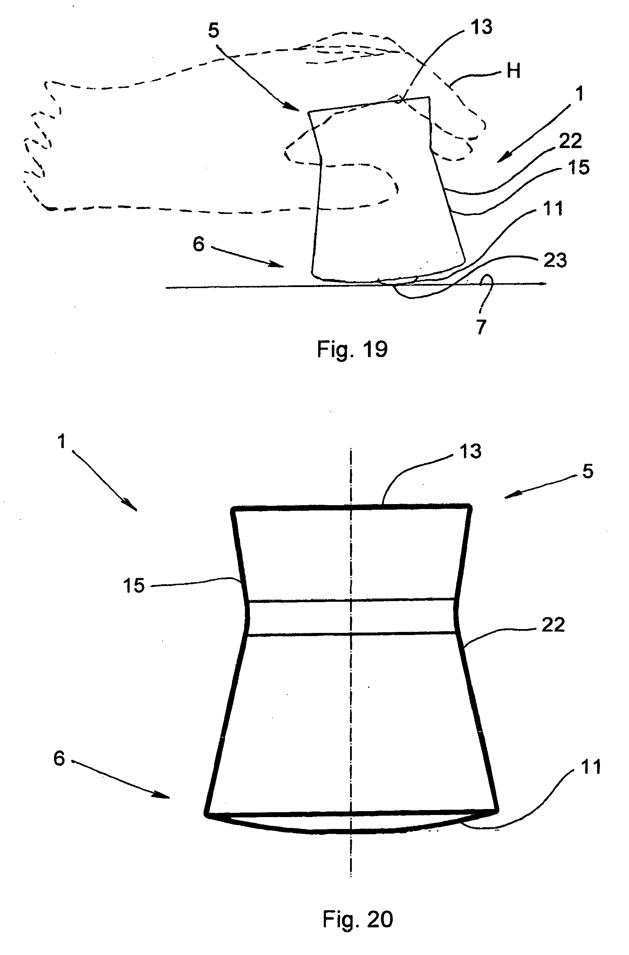

In Figures 19 and 20 there is shown a fifth embodiment of the control device 1 having a section, taken along a plane perpendicular to the symmetry axis S, which is substantially circular.

## Claims

1. Control device for remote control of a system (2), comprising:
- a containing structure comprising a casing (15) suitable for housing said control device (1) and shaped for being manoeuvred by a user;
- position sensor means (3, 4) arranged in said containing structure for detecting rotational and/or oscillatory movements with respect to reference axes of said containing structure;
- a processing unit (8), arranged in said containing structure, connected to said position sensor means (3, 4) to generate control signals (A) to send to said system (2) to manage said system (2) and remote-control said system (2);
**characterised in that** said casing (15) comprises at least one lower surface shaped as a cupola (11) so as to be restable and/or pivotable on a resting surface (7) to impress rotations and/or oscillations of said control device (1) around an axis (P) perpendicular to said resting surface (7);
- activating means (18) being provided connected to said processing unit (8) and arranged at said at least one lower surface in said containing structure for activating said control device (1) only when said control device (1) contacts said resting surface (7) and exerts an appropriate pressure on said resting surface (7), said activating means (18) being suitable for contacting said resting surface (7) at a zone (23; 24) obtained on said at least one lower surface to activate said control device (1);
- said zone (23) acting as a sort of fulcrum that constitutes the centre of said reference axes on which to pivot said control device (1) to be able to move said control device (1) as a control lever;
- said control device (1) further comprising further activating means placed at a further zone (24) obtained on an upper surface (13), said further activating means being suitable for detecting a contact between said further zone (24) and said resting surface (7).

2. Control device according to claim 1, wherein said casing (15) has a substantially circular cross section.

3. Control device according to claim 1, wherein said casing (15) has a substantially polygonal cross section.

4. Control device according to any preceding claim, wherein said activating means (18) comprises a pressure sensor, or a proximity sensor or a microswitch.

5. Control device according to any preceding claim, wherein said movements comprise translations of said control device (1) on said resting surface (7).

6. Control device according to any preceding claim, and further comprising first transceiver means (17) of wireless type connected to said processing unit (8) for sending said control signals (A) to said system (2).

7. Control device according to any preceding claim, further comprising interface means (16) suitable for interfacing said control device (1) and said user.

8. Control device according to any preceding claim, wherein said system (2) comprises second transceiver means (20), that receives said control signals (A) coming from said first transceiver means (17) and sends signals (B) to said first transceiver means (17), said second transceiver means (20) being of wireless type.

9. Control device according to any preceding claim, further comprising pushbutton means (10) that is suitable, once it has been actuated by said user, for commanding the transmission of said control signals (A) to said system (2).

10. Use of a control device as disclosed in claims 1 to 9, for managing navigation menus.

11. Use of a control device as disclosed in claims 1 to 9, to move an automatic mechanical apparatus.

12. Use of a control device as disclosed in claims 1 to 9, to perform word processing operations.

13. Use of a control device as disclosed in claims 1 to 9, for game applications.

## Patentansprüche

1. Steuereinrichtung zur Fernsteuerung eines Systems (2), die Folgendes aufweist:
- eine Haltestruktur, die ein Gehäuse (15) aufweist, das dazu ausgebildet ist, die Steuereinrichtung (1) zu beherbergen, und das dazu ausgestaltet ist, durch einen Nutzer manövriert zu werden;
- ein Lagesensormittel (3, 4), das in der Haltestruktur angeordnet ist, um Drehbewegungen und/oder Oszillationsbewegungen gegenüber Referenzachsen der Haltestruktur zu ermitteln;
- eine Verarbeitungseinheit (8), die in der Haltestruktur angeordnet ist und mit dem Lagesensormittel (3, 4) verbunden ist, um zu dem System (2) zu sendende Steuersignale (A) zu erzeugen, um das System (2) zu leiten, und um das System (2) fernzusteuern;
- **dadurch gekennzeichnet, dass** das Gehäuse (15) zumindest eine untere Fläche aufweist, die als Kuppel (11) gestaltet ist, um auf einer Ruhefläche (7) ruhen und/oder verschwenkt werden zu können, um Verdrehungen und/oder Oszillationen der Steuereinrichtung (1) um eine Achse (P), die senkrecht zur Ruhefläche (7) ist, einzuprägen;
- wobei ein Aktivierungsmittel (18) vorgesehen ist, das mit der Verarbeitungseinheit (8) verbunden ist und bei der zumindest einen unteren Fläche in der Haltestruktur angeordnet ist, um die Steuereinrichtung (1) erst dann zu aktivieren, wenn die Steuereinrichtung (1) die Ruhefläche (7) kontaktiert und einen angemessenen Druck auf die Ruhefläche (7) ausübt, wobei das Aktivierungsmittel (18) dazu ausgebildet ist, die Ruhefläche (7) in einem Bereich (23; 24) zu kontaktieren, der an der zumindest einen unteren Fläche vorgesehen ist, um die Steuereinrichtung (1) zu aktivieren;
- wobei der Bereich (23) als eine Art Drehpunkt wirkt, der das Zentrum der Referenzachsen darstellt, um die die Steuereinrichtung (1) zu verschwenken ist, um die Steuereinrichtung (1) als Steuerhebel bewegen zu können;
- wobei die Steuereinrichtung (1) ferner ein weiteres Aktivierungsmittel aufweist, das in einem weiteren Bereich (24) platziert ist, der an einer oberen Fläche (13) vorgesehen ist, wobei das weitere Aktivierungsmittel dazu ausgebildet ist, einen Kontakt zwischen dem weiteren Bereich (24) und der Ruhefläche (7) zu ermitteln.

2. Steuereinrichtung gemäß Anspruch 1, wobei das Gehäuse (15) einen im Wesentlichen kreisförmigen Querschnitt aufweist.

3. Steuereinrichtung gemäß Anspruch 1, wobei das Gehäuse (15) einen im Wesentlichen polygonförmigen Querschnitt aufweist.

4. Steuereinrichtung gemäß irgendeinem der vorhergehenden Ansprüche, wobei das Aktivierungsmittel (18) einen Drucksensor oder einen Näherungssensor oder einen Mikroschalter umfasst.

5. Steuereinrichtung gemäß irgendeinem der vorhergehenden Ansprüche, wobei die Bewegungen Translationen der Steuereinrichtung (1) auf der Ruhefläche (7) umfassen.

6. Steuereinrichtung gemäß irgendeinem der vorhergehende Ansprüche, ferner aufweisend ein erstes Sender-Empfängermittel (17) drahtloser Art, das mit der Verarbeitungseinheit (8) verbunden ist, um die Steuersignale (A) zum System zu senden.

7. Steuereinrichtung gemäß irgendeinem der vorhergehenden Ansprüche, ferner aufweisend ein Schnittstellenmittel (16), das dazu ausgebildet ist, eine Schnittstelle zwischen der Steuereinrichtung (1) und dem Nutzer zu bilden.

8. Steuereinrichtung gemäß irgendeinem der vorhergehenden Ansprüche, wobei das System (2) ein zweites Sender-Empfängermittel (20) aufweist, das die Steuersignale (A) empfängt, die vom ersten Sender-Empfängermittel (17) kommen, und das Signale (B) zum ersten Sender-Empfängermittel (17) sendet, wobei das zweite Sender-Empfängermittel (20) drahtloser Art ist.

9. Steuereinrichtung gemäß irgendeinem der vorhergehenden Ansprüche, ferner aufweisend ein Tastermittel (10), das dazu ausgebildet ist, die Übertragung der Steuersignale (A) zum System (2) zu befehlen, wenn es vom Nutzer betätigt worden ist.

10. Verwendung einer Steuereinrichtung gemäß irgendeinem der Ansprüche 1 bis 9 zur Bedienung von Navigationsmenüs.

11. Verwendung einer Steuereinrichtung gemäß irgendeinem der Ansprüche 1 bis 9 zur Bewegung eines automatisierten mechanischen Geräts.

12. Verwendung einer Steuereinrichtung gemäß irgendeinem der Ansprüche 1 bis 9 zur Ausführung von Wortverarbeitungsoperationen.

13. Verwendung einer Steuereinrichtung gemäß irgendeinem der Ansprüche 1 bis 9 für Spieleanwendungen.

## Revendications

1. Dispositif de commande pour la commande à distance d'un système (2), comprenant :
- une structure de logement comportant un boîtier (15) apte à loger ledit dispositif de commande (1) et conformée de manière à être manoeuvrée par un utilisateur ;
- des moyens de détection de position (3, 4) disposés dans ladite structure de logement afin de détecter des mouvements de rotation et/ou d'oscillation par rapport à des axes de référence de ladite structure de logement ;
- une unité de traitement (8), disposée dans ladite structure de logement et connectée auxdits moyens de détection de position (3, 4) afin de générer des signaux de commande (A) devant être envoyés audit système (2) pour gérer ledit système (2) et commander à distance ledit système (2) ;
**caractérisé en ce que** ledit boîtier (15) comprend au moins une surface inférieure ayant la forme d'une coupole (11) de manière à pouvoir être en appui et/ou à pouvoir pivoter sur une surface d'appui (7) afin d'imprimer audit dispositif de commande (1) des rotations et/ou des oscillations autour d'un axe (P) perpendiculaire à ladite surface d'appui (7) ;
- moyens d'activation (18) étant prévus pour être connectés à ladite unité de traitement (8) et étant disposés au niveau de ladite au moins une surface inférieure dans ladite structure de logement afin d'activer ledit dispositif de commande (1) seulement lorsque ledit dispositif de commande (1) est au contact de ladite surface d'appui (7) et exerce une pression appropriée sur ladite surface d'appui (7), lesdits moyens d'activation (18) étant aptes à entrer en contact avec ladite surface d'appui (7) au niveau d'une zone (23 ; 24) obtenue sur ladite au moins une surface inférieure afin d'activer ledit dispositif de commande (1);
- ladite zone (23) agissant comme une sorte de pivot qui constitue le centre desdits axes de référence par rapport auquel faire pivoter ledit dispositif de commande (1) afin d'être capable de déplacer ledit dispositif de commande (1) à la manière d'un levier de commande;
- ledit dispositif de commande (1) comprenant en outre des moyens d'activation supplémentaires placés au niveau d'une zone supplémentaire (24) obtenue sur une surface supérieure (13), lesdits moyens d'activation supplémentaires étant aptes à détecter un contact entre ladite zone supplémentaire (24) et ladite surface d'appui (7).

2. Dispositif de commande selon la revendication 1, dans lequel ledit boîtier (15) a une section transversale sensiblement circulaire.

3. Dispositif de commande selon la revendication 1, dans lequel ledit boîtier (15) a une section transversale sensiblement polygonale.

4. Dispositif de commande selon une quelconque revendication précédente, dans lequel lesdits moyens d'activation (18) comprennent un détecteur de pression, ou un détecteur de proximité ou un microcommutateur.

5. Dispositif de commande selon une quelconque revendication précédente, dans lequel lesdits mouvements comprennent des translations dudit dispositif de commande (1) sur ladite surface de repos (7).

6. Dispositif de commande selon une quelconque revendication précédente, et comprenant en outre des premiers moyens d'émission-réception (17) du type sans fil connectés à ladite unité de traitement (8) afin d'envoyer lesdits signaux de commande (A) audit système (2).

7. Dispositif de commande selon une quelconque revendication précédente, comprenant en outre des moyens d'interface (16) aptes à être une interface entre ledit dispositif de commande (1) et ledit utilisateur.

8. Dispositif de commande selon une quelconque revendication précédente, dans lequel ledit système (2) comprend des deuxièmes moyens d'émission-réception (20), qui reçoivent lesdits signaux de commande (A) provenant desdits premiers moyens d'émission-réception (17) et envoient des signaux (B) auxdits premiers moyens d'émission-réception (17), lesdits deuxièmes moyens d'émission-réception (20) étant du type sans fil.

9. Dispositif de commande selon une quelconque revendication précédente, comprenant en outre des moyens de type bouton-poussoir (10) qui sont aptes, une fois qu'ils ont été actionnés par ledit utilisateur, à commander la transmission desdits signaux de commande (A) audit système (2).

10. Utilisation d'un dispositif de commande tel que décrit dans les revendications 1 à 9, pour la gestion de menus de navigation.

11. Utilisation d'un dispositif de commande tel que décrit dans les revendications 1 à 9, pour le déplacement d'un appareil mécanique automatique.

12. Utilisation d'un dispositif de commande tel que décrit dans les revendications 1 à 9, pour effectuer des opérations de traitement de texte.

13. Utilisation d'un dispositif de commande tel que décrit dans les revendications 1 à 9, pour des applications de jeux.
